# EUROPEAN PATENT SPECIFICATION

(11) **EP 3 919 530 B1**
(45) Date of publication and mention of the grant of the patent: **24.04.2024**
(21) Application number: 19912360.5
(22) Date of filing: 25.11.2019
(51) Int. Cl.: C08F 220/34, C08K 5/18, C08L 33/08, C08K 3/04, C08F 8/32, C08F 220/18

(54) **CROSSLINKABLE RUBBER COMPOSITION, ACRYLIC RUBBER, AND CURED RUBBER PRODUCT**
VERNETZBARE KAUTSCHUKZUSAMMENSETZUNG, ACRYLKAUTSCHUK UND GEHÄRTETES KAUTSCHUKPRODUKT
COMPOSITION DE CAOUTCHOUC RÉTICULABLE, CAOUTCHOUC ACRYLIQUE, ET PRODUIT DE CAOUTCHOUC DURCI

(30) Priority: 31.01.2019 JP 2019015901
(43) Date of publication of application: 08.12.2021
(73) Proprietor: Denka Company Limited, Tokyo 103-8338 (JP)
(72) Inventor: NAKANO, Tatsuya, Ichihara-city, Chiba 290-8588 (JP); MIYAUCHI, Toshiaki, Ichihara-city, Chiba 290-8588 (JP)
(74) Representative: Hoffmann Eitle
(86) International application number: PCT/JP2019/046019
(87) International publication number: WO 2020/158132

(56) References cited:
- WO-A1-2009/099113
- WO-A1-2018/101146
- WO-A2-01/96416
- JP-A- 2001 192 420
- JP-A- 2008 214 418
- JP-A- 2009 084 514
- JP-A- 2009 084 514
- JP-A- 2009 209 268

## Description

### Technical Field

The present invention relates to a crosslinkable rubber composition, an acrylic rubber, and a cured rubber product.

### Background Art

Acrylic rubbers are known as rubber materials excellent in heat resistance and oil resistance, and cured products obtained by curing rubber compositions containing acrylic rubbers are used suitably for parts for motor vehicles and the like.

For example, Patent Literatures 1 and 2 describe acrylic rubber compositions obtained by blending carboxyl group-containing acrylic rubbers in combination with guanidine compounds, diamine compounds, and phenolic antioxidants.

Further acrylic rubber compositions with heat resistant properties are described in JP2009084514A and JP2009209268A.

### Citation List

### Patent Literature

Patent Literature 1: Japanese Unexamined Patent Publication No. 2004-175840
Patent Literature 2: Japanese Patent No. 4851398

### Summary of Invention

### Technical Problem

Further heat resistance has been required for rubber parts for motor vehicles in recent years due to countermeasures to emission control, increase in the output of engines, and the like. Especially in hose members, the suppression of decrease in tensile strength and elongation at high temperature has been required.

An object of the present invention is to provide a crosslinkable rubber composition which can form a cured rubber product in which decrease in tensile strength and elongation at high temperature (for example, 190°C) is suppressed. An object of the present invention is to provide an acrylic rubber which enables suppressing decrease in tensile strength and elongation at high temperature (for example, 190°C) and a crosslinkable rubber composition containing the acrylic rubber. An object of the present invention is to provide a cured rubber product in which decrease in tensile strength and elongation at high temperature (for example, 190°C) is suppressed.

### Solution to Problem

One aspect of the present invention relates to a crosslinkable rubber composition, comprising: an acrylic rubber; an amine compound represented by the following formula (A-1); a carbon black; and a crosslinking agent. In this composition, the acrylic rubber has acrylate units and carboxy group-containing monomer units, and has 0.5 to 10 parts by mass of ethylene units with respect to 100 parts by mass of the above-mentioned acrylate units and 5 to 20 parts by mass of alkyl methacrylate units with respect to 100 parts by mass of the above-mentioned acrylate units. 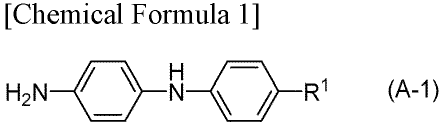 wherein R¹ represents a hydrogen atom or an amino group in the formula (A-1).

In one mode, the content of the above-mentioned carboxy group-containing monomer units may be 0.1 to 5 parts by mass with respect to 100 parts by mass of the above-mentioned acrylate units.

In one mode, the ratio of a total number of amino groups (-NH₂) which the above-mentioned amine compound has, C₂, to a total number of carboxyl groups which the above-mentioned acrylic rubber has, C₁, (C₂/C₁) may be 0.1 to 5.

Another aspect of the present invention relates to an acrylic rubber, comprising acrylate units, carboxy group-containing monomer units, amine-containing monomer units having a group represented by the following formula (B-1), and ethylene units at 0.5 to 10 parts by mass with respect to 100 parts by mass of the above-mentioned acrylate units and alkyl methacrylate units at 5 to 20 parts by mass with respect to 100 parts by mass of the above-mentioned acrylate units. 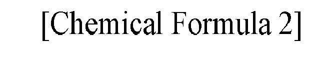 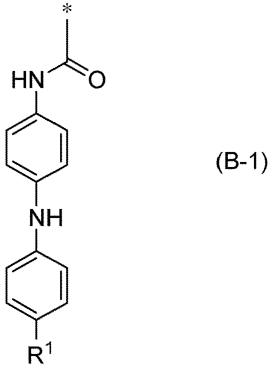 wherein R¹ represents a hydrogen atom or an amino group in the formula (B-1).

In one mode, the content of the above-mentioned amine-containing monomer units may be 0.1 to 5 parts by mass with respect to 100 parts by mass of the above-mentioned acrylate units.

In one mode, the ratio of the number of the above-mentioned amine-containing monomer units to a total number of the above-mentioned carboxy group-containing monomer units and the above-mentioned amine-containing monomer units may be 0.09 to 0.8.

Yet another aspect of the present invention relates to a crosslinkable rubber composition, comprising: the above-mentioned acrylic rubber; a carbon black; and a crosslinking agent.

Yet another aspect of the present invention relates to a cured rubber product, wherein the cured rubber product is a cured product of the above-mentioned crosslinkable rubber composition.

Yet another aspect of the present invention relates to a hose member, comprising the above-mentioned cured rubber product.

### Advantageous Effects of Invention

According to the present invention, a crosslinkable rubber composition which can form a cured rubber product in which decrease in tensile strength and elongation at high temperature (for example, 190°C) is suppressed is provided. According to the present invention, an acrylic rubber which enables suppressing decrease in tensile strength and elongation at high temperature (for example, 190°C) and a crosslinkable rubber composition, comprising the acrylic rubber are provided. According to the present invention, a cured rubber product in which decrease in tensile strength and elongation at high temperature (for example, 190°C) is suppressed is further provided.

### Description of Embodiments

Suitable embodiments of the present invention will be described in detail hereinafter.

### (Crosslinkable rubber composition)

### <First embodiment>

A crosslinkable rubber composition according to a first embodiment contains an acrylic rubber, an amine compound represented by the following formula (A-1), a carbon black, and a crosslinking agent.

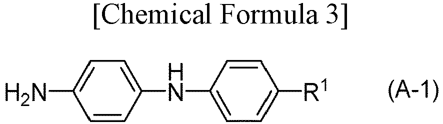

R¹ represents a hydrogen atom or an amino group in the formula (A-1).

In the first embodiment, the acrylic rubber has acrylate units and carboxy group-containing monomer units, and has 0.5 to 10 parts by mass of ethylene units with respect to 100 parts by mass of the acrylate units and 5 to 20 parts by mass of alkyl methacrylate units with respect to 100 parts by mass of the acrylate units.

In a crosslinkable rubber composition according to the first embodiment, the acrylic rubber has the carboxy group-containing monomer units. The amine compound represented by the formula (A-1) has a diphenylamine skeleton and an amino group (-NH₂) which have heat deterioration suppression action. For this reason, when the crosslinkable rubber composition according to the first embodiment is cured, and carboxy groups of the acrylic rubber and amino groups of the amine compound are dehydrated and condensed to form amide bonds. Since the diphenylamine skeletons are connected with the acrylic rubber by the amide bonds, the heat deterioration (especially decrease in tensile strength and elongation) of a cured rubber product is suppressed.

In the crosslinkable rubber composition according to the first embodiment, the acrylic rubber has ethylene units and/ alkyl methacrylate units. When an acrylic rubber is exposed to high temperature, the acrylic rubber usually tends to decrease in molecular weight by thermal decomposition. When diphenylamine skeletons are bound to an acrylic rubber as mentioned above, low molecular weight components including a diphenylamine skeleton volatilize, and the heat deterioration suppression effect may decrease in the case where the acrylic rubber decreases in molecular weight. Meanwhile, in the first embodiment, it is considered that since the acrylic rubber has the above-mentioned specific constituent units, crosslinking reaction proceeds simultaneously at the time of thermal decomposition and decrease in the molecular weight of the acrylic rubber is suppressed. In the first embodiment, decrease in the effect due to the volatilization of the low molecular weight components is therefore avoided, and heat deterioration (especially decrease in tensile strength and elongation) is suppressed remarkably.

Components of the crosslinkable rubber composition will be described in detail hereinafter.

The acrylic rubber has the acrylate units, the carboxy group-containing monomer units, the ethylene units, and the alkyl methacrylate units.

The acrylate units are constituent units derived from an acrylate. Examples of the acrylate include alkyl acrylates and alkoxyalkyl acrylates, and, among these, the alkyl acrylates are preferable.

The alkyl acrylates may be, for example, alkyl acrylates having an alkyl group with 1 to 12 carbon atoms, and are preferably alkyl acrylates having an alkyl group with 1 to 8 carbon atoms, and more preferably alkyl acrylates having an alkyl group with 2 to 4 carbon atoms.

Examples of the alkyl acrylates include methyl acrylate, ethyl acrylate, n-propyl acrylate, n-butyl acrylate, isobutyl acrylate, n-pentyl acrylate, isoamyl acrylate, n-hexyl acrylate, 2-methylpentyl acrylate, n-octyl acrylate, 2-ethylhexyl acrylate, and n-dodecyl acrylate.

The content of the alkyl acrylate units in the acrylic rubber may be, for example, 50% by mass or more, preferably 70% by mass or more, and more preferably 90% by mass or more based on the total amount of the acrylic rubber. The content of the alkyl acrylate units in the acrylic rubber may be, for example, 99.9% by mass or less, and is preferably 99.8% by mass or less, and more preferably 99.7% by mass or less based on the total amount of the acrylic rubber.

The carboxy group-containing monomer units are constituent units derived from a carboxy group-containing monomer. The carboxy group-containing monomers may be a monomer which has carboxy groups, and may be monomers which can be copolymerized with the alkyl acrylate.

Examples of the carboxy group-containing monomers include acrylic acid, methacrylic acid, crotonic acid, 2-pentenoic acid, maleic acid, fumaric acid, itaconic acid, and unsaturated dicarboxylic acid monoesters.

Examples of the unsaturated dicarboxylic acid monoesters include monoalkyl maleates, monoalkyl fumarates, monocyclohexyl maleate, monocyclohexyl fumarate, and cinnamic acid.

As the unsaturated dicarboxylic acid monoesters, unsaturated dicarboxylic acid monoalkyl esters are preferable. Alkyl groups which the unsaturated dicarboxylic acid monoalkyl esters have may be, for example, alkyl groups having 1 to 12 carbon atoms, alkyl groups having preferably 1 to 8 carbon atoms, and more preferably alkyl groups having 2 to 4 carbon atoms.

Specific examples of the unsaturated dicarboxylic acid monoesters include mono-n-butyl maleate, monoethyl maleate, monomethyl maleate, mono-n-butyl fumarate, monoethyl fumarate, and monomethyl fumarate.

The content of the carboxy group-containing monomer units is preferably 0.1 parts by mass or more, more preferably 0.2 parts by mass or more, and further preferably 0.3 parts by mass or more with respect to 100 parts by mass of the acrylate units. Increasing the content of the carboxy group-containing monomer units increases reactive sites with the amine compound and crosslinking points by the crosslinking agent, easily improves the effect of suppressing heat deterioration, and improves the crosslinkablity, and a more rigid rubber material is easily obtained.

The content of the carboxy group-containing monomer units is preferably 5 parts by mass or less, more preferably 4 parts by mass or less, and further preferably 3 parts by mass or less with respect to 100 parts by mass of the acrylate units. The tear resistance of the cured rubber product tends to be improved by reducing the content of the carboxy group-containing monomer units.

The ethylene units are constituent units derived from ethylene.

The content of the ethylene units is 0.5 parts by mass or more, more preferably 0.7 parts by mass or more, and further preferably 1 part by mass or more with respect to 100 parts by mass of the acrylate units. Increasing the content of the ethylene units easily advances crosslinking reaction at the time of thermal decomposition and suppresses decrease in the molecular weight of the acrylic rubber, and the effect of suppressing heat deterioration is easily obtained.

The content of the ethylene units is 10 parts by mass or less, more preferably 7 parts by mass or less, and further preferably 5 parts by mass or less with respect to 100 parts by mass of the acrylate units. The elongation of the cured rubber product tends to be maintained after a heat resistance test by reducing the content of the ethylene units.

The alkyl methacrylate units are constituent units derived from an alkyl methacrylate.

The alkyl methacrylates may be alkyl methacrylates having alkyl groups with 1 to 12 carbon atoms, and are preferably alkyl methacrylates having alkyl groups with 1 to 8 carbon atoms, and more preferably alkyl methacrylates having alkyl groups with 1 to 4 carbon atoms.

Examples of the alkyl methacrylates include methyl methacrylate, ethyl methacrylate, n-butyl methacrylate, and isobutyl methacrylate.

The content of the alkyl methacrylate units is 5 parts by mass or more, more preferably 7 parts by mass or more, and further preferably 10 parts by mass or more with respect to 100 parts by mass of the acrylate units. Increasing the content of the alkyl methacrylate units easily advances crosslinking reaction at the time of thermal decomposition and suppresses decrease in the molecular weight of the acrylic rubber, and the effect of suppressing heat deterioration is easily obtained.

The content of the alkyl methacrylate units is 20 parts by mass or less with respect to 100 parts by mass of the acrylate units. The cold resistance of the cured rubber product tends to be improved by reducing the content of the alkyl methacrylate units.

The acrylic rubber has the ethylene units and the alkyl methacrylate units.

The acrylic rubber may further have other monomer units than the above. Examples of the other monomer units include ethylenic unsaturated compounds including vinyl acetate; alkyl vinyl ketones such as methyl vinyl ketone; vinyl or allyl ethers such as vinyl ethyl ether or allyl methyl ether; vinyl aromatic compounds such as styrene, α-methylstyrene, chlorostyrene, vinyltoluene, and vinylnaphthalene; vinyl nitriles such as acrylonitrile and methacrylonitrile; acrylamide; propylene; butadiene; isoprene; pentadiene; vinyl chloride; vinylidene chloride; vinyl fluoride; vinylidene fluoride; ethylene; vinyl propionate; maleate diester such as dimethyl maleate; dialkyl fumarates such as dimethyl fumarate; dialkyl itaconates such as dimethyl itaconate; dialkyl citraconates such as dimethyl citraconate; dialkyl mesaconates such as dimethyl mesaconate; 2-pentenedioic acid dialkyl esters such as 2-pentenedioic acid dimethyl ester; and dialkyl acetylenedicarboxylates such as dimethyl acetylenedicarboxylate.

The content of the other monomer units may be 20 parts by mass or less, and is preferably 10 parts by mass or less, more preferably 5 parts by mass or less, and may be 0 parts by mass (that is, the other monomers are not contained) with respect to 100 parts by mass of the acrylate units.

The amine compound is a compound represented by the formula (A-1). In the formula (A-1), R¹ is a hydrogen atom or an amino group (-NH₂), and is preferably a hydrogen atom.

The ratio of the total number of the amino groups (-NH2) which the amine compound has C₂ to the total number of the carboxyl groups which the acrylic rubber has C₁ (C₂/C₁) is preferably 0.1 or more, more preferably 0.2 or more, and further preferably 0.3 or more. When the ratio (C2/C1) is in the above-mentioned range, long-term heat resistance is further improved.

The ratio (C₂/C₁) is preferably 5 or less, more preferably 4 or less, and further preferably 3 or less. When the ratio (C₂/C₁) is in the above-mentioned range, the crosslinking rate of the crosslinkable rubber composition tends to be improved.

The content of the amine compound in the crosslinkable rubber composition is not particularly limited, and may be a content, for example, wherein the ratio (C₂/C₁) is in the above-mentioned preferable range.

The content of the amine compound in the crosslinkable rubber composition may be, for example, 0.1 parts by mass or more, and is preferably 0.2 parts by mass or more and more preferably 0.3 parts by mass or more, for example, with respect to 100 parts by mass of the acrylic rubber. The content of the amine compound may be, for example, 10 parts by mass or less, and is preferably 5 parts by mass or less and more preferably 3 parts by mass or less with respect to 100 parts by mass of the acrylic rubber.

Examples of the carbon black include acetylene black, ketjen black, thermal black, channel black, furnace black, lamp black, and graphitized carbon black.

The content of the carbon black in the crosslinkable rubber composition may be, for example, 20 parts by mass or more, and is preferably 30 parts by mass or more and more preferably 40 parts by mass or more with respect to 100 parts by mass of the acrylic rubber. The mechanical characteristic of the cured rubber product tends to be further improved by increasing the content of the carbon black.

The content of the carbon black may be, for example, 90 parts by mass or less, and is preferably 80 parts by mass or less and more preferably 70 parts by mass or less with respect to 100 parts by mass of the acrylic rubber. The rubber elasticity of the cured rubber product tends to be further improved by reducing the content of the carbon black.

The crosslinking agent may be a crosslinking agent which can crosslink the acrylic rubber. As the crosslinking agent, a well-known crosslinking agent can be used without particular limitation as a crosslinking agent which can crosslink the acrylic rubber having the carboxy groups.

Examples of the crosslinking agent include a crosslinking agent which can react with the carboxy groups in the acrylic rubber and form crosslinked structure when the crosslinkable rubber composition is heated. The crosslinking agent may have crosslinking groups which react with carboxy groups or groups which produce the crosslinkable groups by heating.

Examples of the crosslinking agent include polyvalent amine compounds and carbonates of polyvalent amine compounds.

The content of the crosslinking agent in the crosslinkable rubber composition may be, for example, 0.1 parts by mass or more, and is preferably 0.2 parts by mass or more and more preferably 0.3 parts by mass or more with respect to 100 parts by mass of the acrylic rubber. The mechanical characteristic of the cured rubber product tends to be further improved by increasing the content of the crosslinking agent.

The content of the crosslinking agent may be, for example, 10 parts by mass or less, and is preferably 5 parts by mass or less and more preferably 2 parts by mass or less with respect to 100 parts by mass of the acrylic rubber. The tensile elongation of the cured rubber product tends to be further improved by reducing the content of the crosslinking agent.

The crosslinkable rubber composition may further contain other components than the above. Examples of the other components include a lubricant, a crosslinking promoter, a plasticizer, a filler, a reinforcing agent, and a silane coupling agent.

Examples of the lubricant include liquid paraffin, stearic acid, stearylamine, fatty acid zinc, fatty acid esters, and organosilicones.

The content of the lubricant in the crosslinkable rubber composition may be, for example, 0.1 parts by mass or more, and is preferably 0.3 or more parts by mass and more preferably 0.5 parts by mass or more with respect to 100 parts by mass of the acrylic rubber. The fluidity of the crosslinkable rubber composition tends to be further improved by increasing the content of the lubricant.

The content of the lubricant may be, for example, 10 parts by mass or less, and is preferably 7 parts by mass or less and more preferably 5 parts by mass or less with respect to 100 parts by mass of the acrylic rubber. The heat resistance of the cured rubber product tends to be further improved by reducing the content of the lubricant.

As the crosslinking promoter, a well-known crosslinking promoter can be suitably selected and used depending on the type of the crosslinking agent.

Examples of the crosslinking promoter include aliphatic monovalent secondary amine compounds, aliphatic monovalent tertiary amine compounds, guanidine compounds, imidazole compounds, quaternary onium salts, tertiary phosphine compounds, alkali metal salts of weak acids, and diazabicycloalkene compounds.

The content of the crosslinking promoter in the crosslinkable rubber composition may be, for example, 0.1 parts by mass or more, and is preferably 0.2 parts by mass or more and more preferably 0.3 parts by mass or more with respect to 100 parts by mass of the acrylic rubber. The crosslinking time of the crosslinkable rubber composition can be reduced by increasing the content of the crosslinking promoter.

The content of the crosslinking promoter may be, for example, 10 parts by mass or less, and is preferably 5 parts by mass or less and more preferably 3 parts by mass or less with respect to 100 parts by mass of the acrylic rubber. The heat resistance of the cured rubber product tends to be further improved by reducing the content of the crosslinking promoter.

### <Second embodiment>

A crosslinkable rubber composition according to a second embodiment contains an acrylic rubber, a carbon black, and a crosslinking agent.

In the second embodiment, the acrylic rubber has acrylate units, carboxy group-containing monomer units, amine-containing monomer units having a group represented by the following formula (B-1), and ethylene units at 0.5 to 10 parts by mass with respect to 100 parts by mass of the acrylate units and alkyl methacrylate units at 5 to 20 parts by mass with respect to 100 parts by mass of the acrylate units.

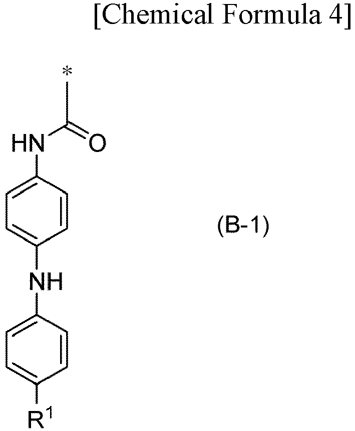

R¹ represents a hydrogen atom or an amino group in the formula (B-1).

In a crosslinkable rubber composition according to the second embodiment, the acrylic rubber has groups represented by the formula (B-1). The groups have a diphenylamine skeleton, and has the function of suppressing the heat deterioration (especially decrease in tensile strength and elongation) of the cured rubber product. Since the acrylic rubber has the ethylene units and the alkyl methacrylate units in the crosslinkable rubber composition according to the second embodiment, decrease in molecular weight due to thermal decomposition at high temperature is suppressed, decrease in the effect due to the volatilization of low molecular weight components is avoided, and heat deterioration (especially decrease in tensile strength and elongation) is suppressed remarkably.

The acrylic rubber in the second embodiment may be an acrylic rubber in which some carboxy groups in the acrylic rubber in the first embodiment react with the amine compound represented by the formula (A-1). That is, as the acrylate units, the carboxy group-containing monomer units, the ethylene units, and the alkyl methacrylate units which the acrylic rubber in the second embodiment has, the same as the constituent units which the acrylic rubber in the first embodiment has can be illustrated. In the second embodiment, the contents of the acrylate units, the ethylene units, and the alkyl methacrylate units in the acrylic rubber may be the same as the contents of the constituent units in the acrylic rubber in the first embodiment.

In the acrylic rubber in the second embodiment, the content of the carboxy group-containing monomer units is preferably 0.05 parts by mass or more, more preferably 0.1 parts by mass or more, and further preferably 0.2 parts by mass or more with respect to 100 parts by mass of the acrylate units. In the second embodiment, the content of the carboxy group-containing monomer units is preferably 4.5 parts by mass or less, more preferably 3.5 parts by mass or less, and further preferably 2.5 parts by mass or less with respect to 100 parts by mass of the acrylate units.

In the acrylic rubber in the second embodiment, the ratio of the number of the amine-containing monomer units to the total number of the carboxy group-containing monomer units and the amine-containing monomer units is preferably 0.09 or more and more preferably 0.1 or more. The ratio is preferably 0.8 or less and more preferably 0.7 or less.

The crosslinkable rubber composition according to the second embodiment may further contain other components than the above.

As the carbon black, the crosslinking agent, and the other components in the second embodiment, the same as the carbon blacks, the crosslinking agents, and the other components in the first embodiment can be illustrated. The contents of the components in the second embodiment may be the same as the contents of the components in the first embodiment.

### (Cured rubber product)

A cured rubber product according to the present embodiment can be obtained by thermosetting the above-mentioned crosslinkable rubber compositions. The cured rubber product according to the present embodiment may be the cured product of the crosslinkable rubber composition according to the first embodiment, may be the cured product of the crosslinkable rubber composition according to the second embodiment, or may be a cured product of a mixture of the crosslinkable rubber composition according to the first embodiment and the crosslinkable rubber composition according to the second embodiment.

The curing conditions of the crosslinkable rubber composition are not particularly limited. The curing temperature may be, for example, 150 to 220°C, and is preferably 160 to 180°C. The curing time may be, for example, 5 minutes to 2 hours, and is preferably 5 to 60 minutes.

Since decrease in tensile strength and elongation at high temperature (for example, 190°C) is suppressed, the cured rubber product according to the present embodiment can be suitably used as rubber members exposed to high temperature.

The cured rubber product according to the present embodiment can be suitably used for the uses of hose members such as transmission oil cooler hoses, engine oil cooler hoses, air duct hoses, turbo intercooler hoses, hot air hoses, radiator hoses, power steering hoses, hoses for fuel systems, and hoses for drain systems of, for example, motor vehicles, construction machinery, hydraulic equipment, and the like.

Although the suitable embodiments of the present invention were described above, the present invention is not limited to the above-mentioned embodiments.

### Examples

Although the present invention will be described in further detail hereinafter by the Examples, the present invention is not limited to these Examples.

### (Production of acrylic rubber)

### <Production of acrylic rubber A>

An acrylic rubber A was produced by the following method.

First, 17 kg of an aqueous 4% by mass partially saponified polyvinyl alcohol solution and 22 g of sodium acetate were fed into a pressure resistant reaction vessel with a capacity of 40 liters, upper air in the tank was replaced with nitrogen while the mixture was well mixed with a stirrer, ethylene was then injected into the upper part in the tank, and the pressure was adjusted to 3.5 MPa. The stirring was continued, the inside of the tank was maintained at 55°C, and a monomer mixed liquid of 7.8 kg of ethyl acrylate, 3.4 kg of n-butyl acrylate, 300 g of monobutyl maleate, and 1.8 g of tert-dodecyl mercaptan was then injected for 6 hours. Simultaneously, an aqueous t-butyl hydroperoxide solution (0.25% by mass, 2 liters) was separately injected from an injection port for 6 hours for polymerization to a final rate of polymerization of 95%. An aqueous sodium borate solution (3.5% by mass, 7 liters) was added to the generated polymerization liquid as a coagulant, and a polymer was solidified, dehydrated, and dried to produce an acrylic rubber A.

### <Production of acrylic rubber B>

An acrylic rubber B was produced in a similar manner to that for the acrylic rubber A except that the ethylene pressure was changed into 10 MPa.

### <Production of acrylic rubber C>

An acrylic rubber C was produced in a similar manner to that for the acrylic rubber A except that the ethylene pressure was changed into 0.5 MPa.

### <Production of acrylic rubber D>

An acrylic rubber D was produced in a similar manner to that for the acrylic rubber A except that the monomer mixed liquid was changed into a monomer mixed liquid of 7.8 kg of ethyl acrylate, 3.4 kg of n-butyl acrylate, 500 g of monobutyl maleate, and 1.8 g of tert-dodecyl mercaptan.

### <Production of acrylic rubber E>

An acrylic rubber E was produced in a similar manner to that for the acrylic rubber A except that the monomer mixed liquid was changed into a monomer mixed liquid of 7.8 kg of ethyl acrylate, 3.4 kg of n-butyl acrylate, 150 g of monobutyl maleate, and 1.8 g of tert-dodecyl mercaptan.

### <Production of acrylic rubber F>

An acrylic rubber F was produced in a similar manner to that for the acrylic rubber A except that ethylene was not used.

### <Production of acrylic rubber G>

An acrylic rubber G was produced in a similar manner to that for the acrylic rubber A except that the monomer mixed liquid was changed into a monomer mixed liquid of 6.2 kg of ethyl acrylate, 3.9 kg of n-butyl acrylate, 1.1 kg of methyl methacrylate, 300 g of monobutyl maleate, and 1.8 g of tert-dodecyl mercaptan.

### <Production of acrylic rubber H>

An acrylic rubber H was produced in a similar manner to that for the acrylic rubber A except that the monomer mixed liquid was changed into a monomer mixed liquid of 5.6 kg of ethyl acrylate, 3.4 kg of n-butyl acrylate, 2.2 kg of methyl methacrylate, 300 g of monobutyl maleate, and 1.8 g of tert-dodecyl mercaptan.

### <Production of acrylic rubber I>

An acrylic rubber I was produced in a similar manner to that for the acrylic rubber A except that the monomer mixed liquid was changed into a monomer mixed liquid of 5.6 kg of ethyl acrylate, 3.4 kg of n-butyl acrylate, 2.2 kg of methyl methacrylate, 300 g of monobutyl maleate, and 1.8 g of tert-dodecyl mercaptan, and ethylene was not used.

### <Production of acrylic rubber J>

An acrylic rubber I was produced in a similar manner to that for the acrylic rubber A except that the monomer mixed liquid was changed into a monomer mixed liquid of 5.6 kg of ethyl acrylate, 3.4 kg of n-butyl acrylate, 2.2 kg of methyl methacrylate, 300 g of monobutyl maleate, and 1.8 g of tert-dodecyl mercaptan, and ethylene was not used.

(Examples 1 to 15 and Comparative Examples 1 to 5) Examples 1 to 9 and 13 to 15 are provided for comparative purposes.

### <Production of crosslinkable rubber compositions>

Crosslinkable rubber compositions were produced by the following method.

Kneading was performed in blending compositions in Tables 1 to 3 using the acrylic rubbers obtained by the above-mentioned methods with a 0.5-L pressure kneader and 6-inch open rolls.

### <Production of cured rubber product>

Cured rubber products were produced by the following method.

Each of the obtained crosslinkable rubber compositions was rolled into a sheet having a thickness of 2.4 mm, then subjected to primary vulcanization at 170°C for 40 minutes with a press vulcanizer and then subjected to secondary vulcanization at 170°C for 4 hours with a Gear oven to produce a cured rubber product.

### <Evaluation method>

(1) Scorch time
   Measurement was performed according to JIS K6300-1-2013.
(2) Vulcanization curve
   Measurement was performed according to JIS K6300-2-2001.
(3) Initial tensile strength and elongation
   Measurement was performed according to JIS K6251-2010.
(4) Initial hardness
   Measurement was performed according to JIS K6253-2006 using a type A durometer.
(5) Permanent compression set
   Measurement was performed according to JIS K6262-2013.
(6) Heat resistance test

The test was performed under the conditions of 190°C and 504 hours according to JIS K6257-2010. The tensile strength, the elongation, and the hardness after the heat resistance test were measured as described in the above-mentioned (3) and (4).

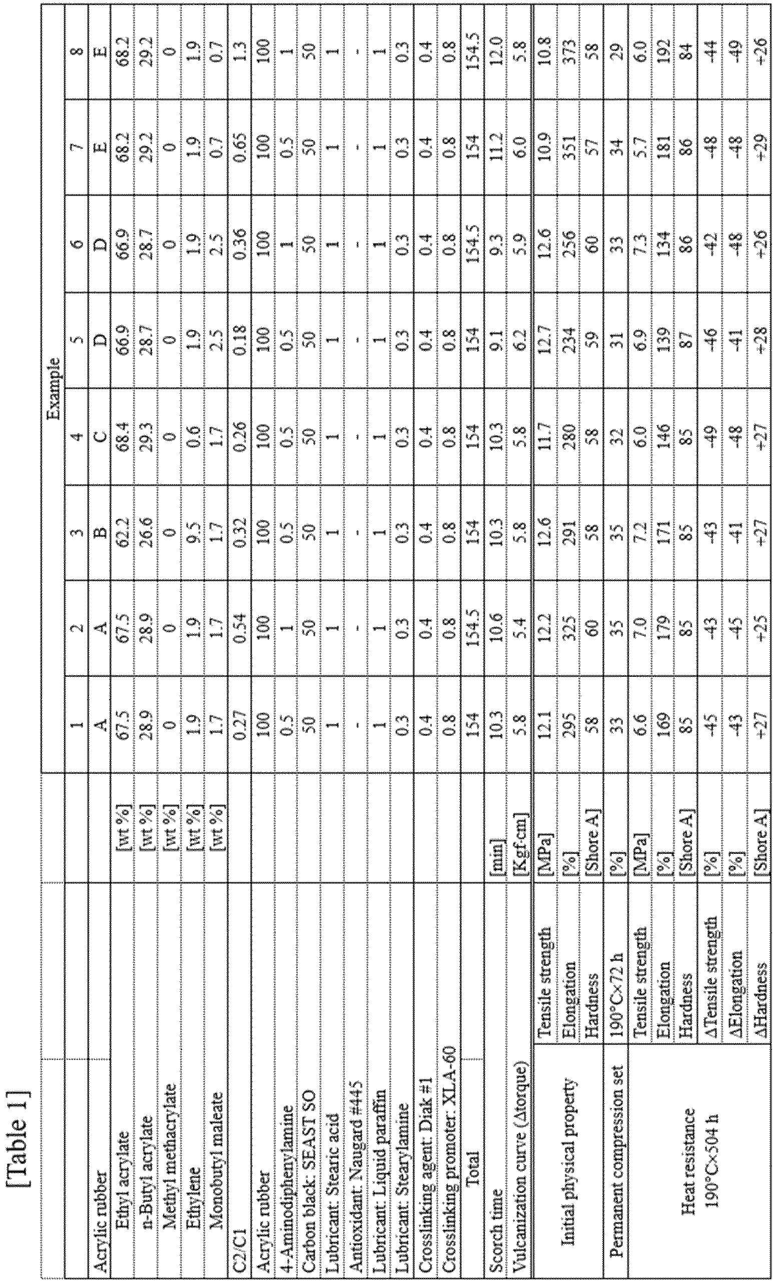

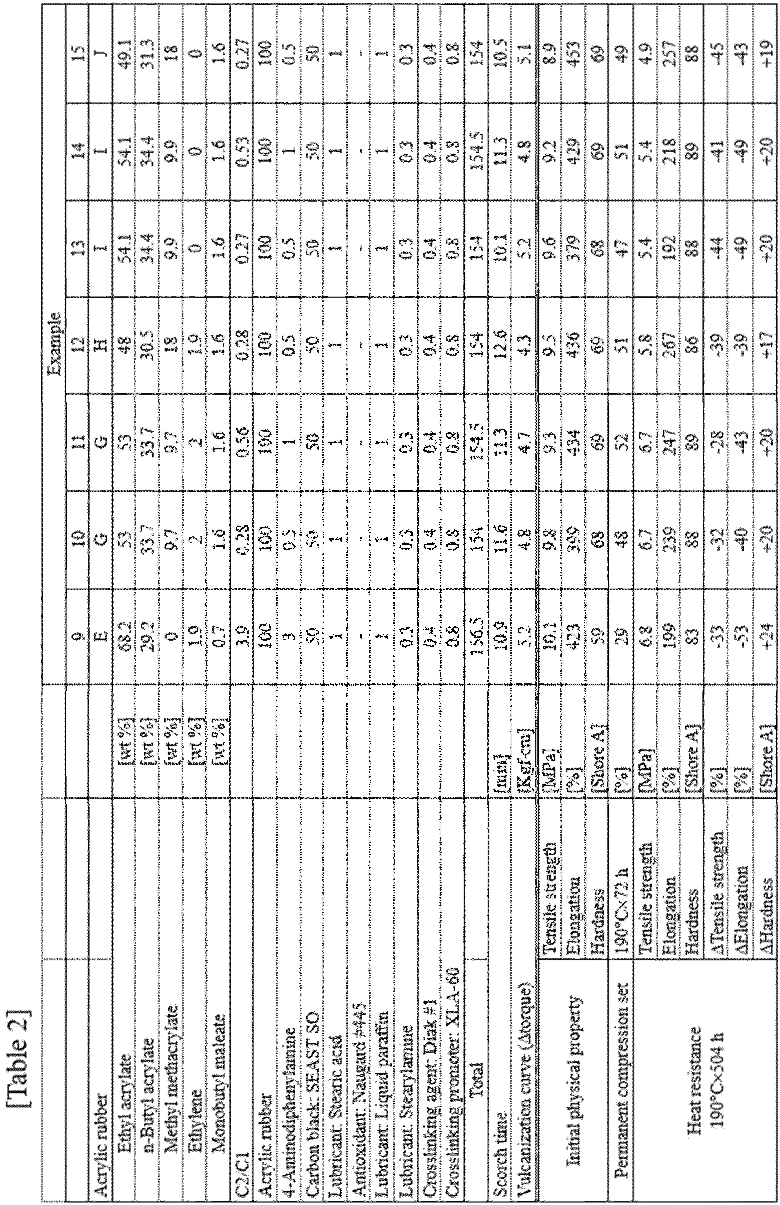

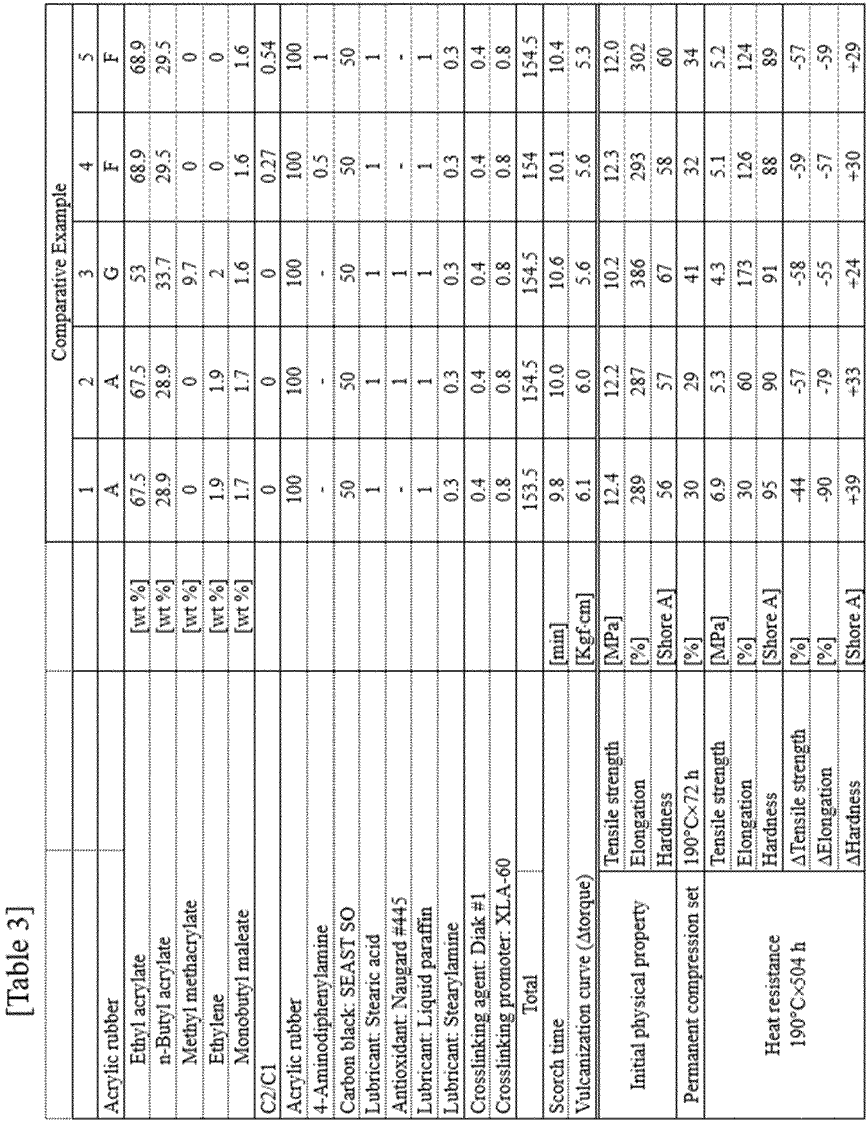

In the tables, the "Carbon black: SEAST SO" indicates the trade name "SEAST SO" (arithmetic average particle size 43 nm) produced by TOKAI CARBON CO., LTD. The "antioxidant: Naugard #445" indicates the trade name "Naugard #445" produced from Addivant. The "crosslinking agent: Diak #1" indicates the trade name "Diak #1" produced by DuPont. The "crosslinking promoter: XLA-60" indicates the trade name "XLA-60" produced by LANXESS Deutschland GmbH.

## Claims

1. A crosslinkable rubber composition, comprising: an acrylic rubber; an amine compound represented by the following formula (A-1); a carbon black; and a crosslinking agent, wherein
the acrylic rubber has acrylate units and carboxy group-containing monomer units, and has 0.5 to 10 parts by mass of ethylene units with respect to 100 parts by mass of the acrylate units and 5 to 20 parts by mass of alkyl methacrylate units with respect to 100 parts by mass of the acrylate units, 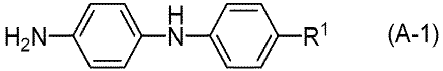 wherein R¹ represents a hydrogen atom or an amino group in the formula (A-1).

2. The crosslinkable rubber composition according to claim 1, wherein a content of the carboxy group-containing monomer units is 0.1 to 5 parts by mass with respect to 100 parts by mass of the acrylate units.

3. The crosslinkable rubber composition according to claim 1 or 2, wherein a ratio of a total number of amino groups (-NH2) which the amine compound has, C₂, to a total number of carboxyl groups which the acrylic rubber has, C₁, (C₂/C₁) is 0.1 to 5.

4. An acrylic rubber, comprising
acrylate units,
carboxy group-containing monomer units,
amine-containing monomer units having a group represented by the following formula (B-1), and
ethylene units at 0.5 to 10 parts by mass with respect to 100 parts by mass of the acrylate units and alkyl methacrylate units at 5 to 20 parts by mass with respect to 100 parts by mass of the acrylate units, 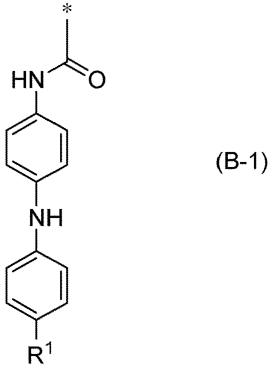 wherein R¹ represents a hydrogen atom or an amino group in the formula (B-1).

5. The acrylic rubber according to claim 4, wherein a content of the amine-containing monomer units is 0.1 to 5 parts by mass with respect to 100 parts by mass of the acrylate units.

6. The acrylic rubber according to claim 4 or 5, wherein a ratio of a number of the amine-containing monomer units to a total number of the carboxy group-containing monomer units and the amine-containing monomer units is 0.09 to 0.8.

7. A crosslinkable rubber composition, comprising: the acrylic rubber according to any one of claims 4 to 6; a carbon black; and a crosslinking agent.

8. A cured rubber product, wherein the cured rubber product is a cured product of the crosslinkable rubber composition according to any one of claims 1 to 3 and 7.

9. A hose member, comprising the cured rubber product according to claim 8.

## Patentansprüche

1. Vernetzbare Kautschukzusammensetzung, umfassend: einen Acrylkautschuk; eine Aminverbindung, dargestellt durch die folgende Formel (A-1); einen Ruß; und ein Vernetzungsmittel, wobei
der Acrylkautschuk Acrylateinheiten und Carboxygruppen-haltige Monomereinheiten aufweist und 0,5 bis 10 Massenteile Ethyleneinheiten, bezogen auf 100 Massenteile der Acrylateinheiten, und 5 bis 20 Massenteile Alkylmethacrylateinheiten, bezogen auf 100 Massenteile der Acrylateinheiten, aufweist, 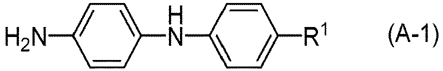
wobei in der Formel (A-1) R¹ für ein Wasserstoffatom oder eine Aminogruppe steht.

2. Vernetzbare Kautschukzusammensetzung gemäß Anspruch 1, wobei ein Gehalt an Carboxygruppen-haltigen Monomereinheiten 0,1 bis 5 Massenteile, bezogen auf 100 Massenteile der Acrylateinheiten, beträgt.

3. Vernetzbare Kautschukzusammensetzung gemäß Anspruch 1 oder 2, wobei ein Verhältnis von der Gesamtzahl der Aminogruppen (-NH2), die die Aminverbindung aufweist, C₂, zu der Gesamtzahl der Carboxylgruppen, die der Acrylkautschuk aufweist, C₁, (C₂/C₁) 0,1 bis 5 beträgt.

4. Acrylkautschuk, umfassend
Acrylat-Einheiten,
Carboxygruppen-haltige Monomereinheiten,
Amin-haltige Monomereinheiten mit einer Gruppe, dargestellt durch die folgende Formel (B-1), und
Ethyleneinheiten zu 0,5 bis 10 Massenteilen, bezogen auf 100 Massenteile der Acrylateinheiten, und Alkylmethacrylateinheiten zu 5 bis 20 Massenteilen, bezogen auf 100 Massenteile der Acrylateinheiten, 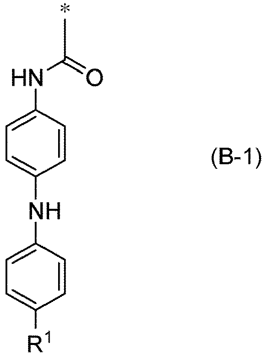
wobei in der Formel (B-1) R¹ für ein Wasserstoffatom oder eine Aminogruppe steht.

5. Acrylkautschuk gemäß Anspruch 4, wobei ein Gehalt an Amin-haltigen Monomereinheiten 0,1 bis 5 Massenteile, bezogen auf 100 Massenteile der Acrylateinheiten, beträgt.

6. Acrylkautschuk gemäß Anspruch 4 oder 5, wobei ein Verhältnis von der Anzahl der Amin-haltigen Monomereinheiten zu der Gesamtzahl der Carboxygruppen-haltigen Monomereinheiten und der Amin-haltigen Monomereinheiten 0,09 bis 0,8 beträgt.

7. Vernetzbare Kautschukzusammensetzung, umfassend: den Acrylkautschuk gemäß einem der Ansprüche 4 bis 6; einen Ruß; und ein Vernetzungsmittel.

8. Vulkanisiertes Kautschukprodukt, wobei das vulkanisierte Kautschukprodukt ein vulkanisiertes Produkt der vernetzbaren Kautschukzusammensetzung gemäß einem der Ansprüche 1 bis 3 und 7 ist.

9. Schlauchelement, umfassend das vulkanisierte Kautschukprodukt gemäß Anspruch 8.

## Revendications

1. Composition de caoutchouc réticulable, comprenant : un caoutchouc acrylique ; un composé amine représenté par la formule (A-1) suivante ; un noir de carbone ; et un agent de réticulation, dans laquelle
le caoutchouc acrylique a des unités acrylate et des unités monomères contenant un groupe carboxy, et a 0,5 à 10 parties en masse d'unités éthylène par rapport à 100 parties en masse des unités acrylate et 5 à 20 parties en masse d'unités méthacrylate d'alkyle par rapport à 100 parties en masse des unités acrylate, 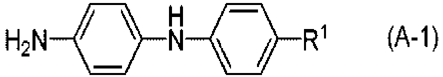
dans laquelle R¹ représente un atome d'hydrogène ou un groupe amino dans la formule (A-1).

2. Composition de caoutchouc réticulable selon la revendication 1, dans laquelle une teneur des unités monomères contenant un groupe carboxy est de 0,1 à 5 parties en masse par rapport à 100 parties en masse des unités acrylate.

3. Composition de caoutchouc réticulable selon la revendication 1 ou la revendication 2, dans laquelle un rapport d'un nombre total de groupes amino (-NH2) contenu dans le composé amine, C₂, à un nombre total de groupes carboxyle contenu dans le caoutchouc acrylique, C₁, (C₂/C₁) est de 0,1 à 5.

4. Caoutchouc acrylique, comprenant
des unités acrylate,
des unités monomères contenant un groupe carboxy,
les unités monomères contenant une amine ayant un groupe représenté par la formule (B-1) suivante, et
des unités éthylène à 0,5 à 10 parties en masse par rapport à 100 parties en masse des unités acrylate et des unités méthacrylate d'alkyle à 5 à 20 parties en masse par rapport à 100 parties en masse des unités acrylate, 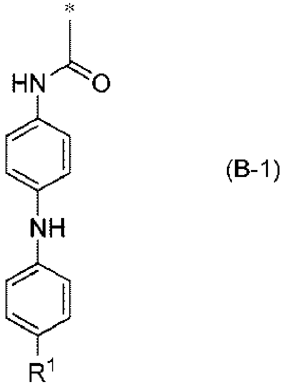 dans lequel R¹ représente un atome d'hydrogène ou un groupe amino dans la formule (B-1).

5. Caoutchouc acrylique selon la revendication 4, dans lequel une teneur des unités monomères contenant une amine est de 0,1 à 5 parties en masse par rapport à 100 parties en masse des unités acrylate.

6. Caoutchouc acrylique selon la revendication 4 ou la revendication 5, dans lequel un rapport d'un nombre d'unités monomères contenant une amine sur un nombre total des unités monomères contenant un groupe carboxy et des unités monomères contenant une amine est de 0,09 à 0,8.

7. Composition de caoutchouc réticulable, comprenant : le caoutchouc acrylique selon l'une quelconque des revendications 4 à 6 ; un noir de carbone ; et un agent de réticulation.

8. Produit de caoutchouc durci, dans lequel le produit de caoutchouc durci est un produit durci de la composition de caoutchouc réticulable selon l'une quelconque des revendications 1 à 3 et 7.

9. Élément tuyau, comprenant le produit de caoutchouc durci selon la revendication 8.
